# EUROPÄISCHE PATENTSCHRIFT

(11) **EP 1 283 817 B1**
(45) Veröffentlichungstag und Bekanntmachung des Hinweises auf die Patenterteilung: **03.08.2005**
(21) Anmeldenummer: 01931655.3
(22) Anmeldetag: 26.04.2001
(51) Int. Cl.: C03B 11/08, C03B 7/12, C03B 11/02, C03B 19/04

(54) **VERFAHREN ZUR HERSTELLUNG VON DÜNNEN GLASARTIKELN DURCH PRESSEN**
METHOD FOR PRODUCING FINE GLASS ARTICLES AND THE USE OF SAID METHOD
PROCEDE DE REALISATION DE FINS ARTICLES EN VERRE, ET MISE EN OEUVRE DUDIT PROCEDE

(30) Priorität: 27.04.2000 DE 10020711; 11.05.2000 DE 10022903; 16.01.2001 DE 10101587
(43) Veröffentlichungstag der Anmeldung: 19.02.2003
(73) Patentinhaber: SCHOTT AG, 55122 Mainz (DE)
(72) Erfinder: KÖRNER, Steffen, 55268 Nieder-Olm (DE); SEMAR, Wolfgang, 55129 Mainz (DE); BONITZ, Ralf, 55122 Mainz (DE); SCHENK, Christian, 55218 Ingelheim (DE)
(74) Vertreter: Fuchs Mehler Weiss & Fritzsche
(86) Internationale Anmeldenummer: PCT/EP2001/004708
(87) Internationale Veröffentlichungsnummer: WO 2001/083386

(56) Entgegenhaltungen:
- DE-A- 3 924 238
- US-A- 4 210 433
- PATENT ABSTRACTS OF JAPAN vol. 1995, no. 2, 31. März 1995 (1995-03-31) -& JP 06 305741 A (OLYMPUS OPTICAL CO LTD), 1. November 1994 (1994-11-01)
- PATENT ABSTRACTS OF JAPAN vol. 1995, no. 10, 30. November 1995 (1995-11-30) & JP 07 172843 A (OLYMPUS OPTICAL CO LTD), 11. Juli 1995 (1995-07-11)
- PATENT ABSTRACTS OF JAPAN vol. 1996, no. 3, 29. März 1996 (1996-03-29) -& JP 07 291634 A (MINOLTA CO LTD), 7. November 1995 (1995-11-07)
- PATENT ABSTRACTS OF JAPAN vol. 1998, no. 2, 30. Januar 1998 (1998-01-30) & JP 09 263414 A (OLYMPUS OPTICAL CO LTD), 7. Oktober 1997 (1997-10-07)
- PATENT ABSTRACTS OF JAPAN vol. 1997, no. 7, 31. Juli 1997 (1997-07-31) -& JP 09 086939 A (OLYMPUS OPTICAL CO LTD), 31. März 1997 (1997-03-31)
- PATENT ABSTRACTS OF JAPAN vol. 1996, no. 8, 30. August 1996 (1996-08-30) -& JP 08 091852 A (OLYMPUS OPTICAL CO LTD), 9. April 1996 (1996-04-09)
- PATENT ABSTRACTS OF JAPAN vol. 1995, no. 1, 28. Februar 1995 (1995-02-28) -& JP 06 298536 A (OLYMPUS OPTICAL CO LTD), 25. Oktober 1994 (1994-10-25)
- PATENT ABSTRACTS OF JAPAN vol. 1996, no. 11, 29. November 1996 (1996-11-29) -& JP 08 169722 A (OLYMPUS OPTICAL CO LTD), 2. Juli 1996 (1996-07-02)
- PATENT ABSTRACTS OF JAPAN vol. 1996, no. 3, 29. März 1996 (1996-03-29) -& JP 07 309630 A (OLYMPUS OPTICAL CO LTD), 28. November 1995 (1995-11-28)
- PATENT ABSTRACTS OF JAPAN vol. 16, no. 479, 6. Oktober 1992 (1992-10-06) -& JP 04 175232 A (OLYMPUS OPTICAL CO LTD), 23. Juni 1992 (1992-06-23)

## Beschreibung

Die Erfindung bezieht sich auf ein Verfahren zur Herstellung von dünnen Glasartikeln aus niedrigviskosem Glas, bei dem eine dünnflüssige Glasmasse in ein Unterwerkzeug eingespeist wird, die dann durch Beschleunigungskräfte vorgeformt wird und danach durch Zusammenführen eines gegenüber dem Unterwerkzeuges positionierten Oberwerkzeuges und des Unterwerkzeuges verpresst wird.

Aufgrund ihrer oberen Entglasungstemperatur sowie der in der Regel großen Kristallwachstumsgeschwindigkeit müssen viele Glasschmelzen für optische und technische Anwendungszwecke bei sehr hohen Temperaturen und somit sehr niedrigen Viskositäten verarbeitet werden. Dies verlangt nach einem Verfahren, welches der Glasschmelze zwischen dem Einspeisen und der Formgebung möglichst wenig Wärme entzieht, so dass zum Zeitpunkt der Formgebung noch eine möglichst heiße, damit niedrigviskose und leicht verformbare Glasschmelze vorliegt. Um eine hierfür erforderliche schnelle Verarbeitung zu realisieren, muss nach dem Einbringen und dem Portionieren der Glasschmelze durch den Speiser diese unter geringstem zeitlichen Verzug einer Heißformgebung zugeführt werden.

Das Pressen von Glasartikeln ist eine der vielfältigsten und am weitesten verbreiteten Fertigungsmethode der Glasverarbeitung. Die vollautomatisch arbeitenden Maschinenpressen kennen praktisch keine Gewichtsbegrenzung der zu verarbeitenden Glasposten. Es werden Artikel, die nur wenige Gramm wiegen, aber auch solche, die mehrere Kilogramm schwer sind, maschinell verarbeitet. Entsprechend vielfältig sind die zur Produktion verwendeten Maschinen. Neben den manuell bedienten oder auch halbautomatisch arbeitenden Pressen, die in der Regel als Mehrstationen-Drehtischpressen mit einem Stempel und mehreren Formen arbeiten.

Gemeinsames Merkmal automatisierter Preßverfahren ist die räumliche Trennung der einzelnen Prozeßschritte, wie Einspeisen, Pressen und Entnahme. Dem Gesamtprozeß überlagert findet eine zeitlich fortschreitende Abkühlung des Glaspostens bis zur endgültigen Erstarrung statt.

Bei dünnen scheibenförmigen Glashalbzeugen, wie z. B. Substraten, Linsenarrays, Asphärenarrays und strukturierten Körpern, werden hohe Anforderungen an die Oberflächenqualität, insbesondere die Oberflächenrauhigkeit, gestellt.

Hierzu werden nach dem Stand der Technik Anlagen eingesetzt, die sowohl einen Speiser als auch ein Preßwerkzeug, für gewöhnlich bestehend aus einem Ober- und mehreren Unterwerkzeugen, aufweisen.

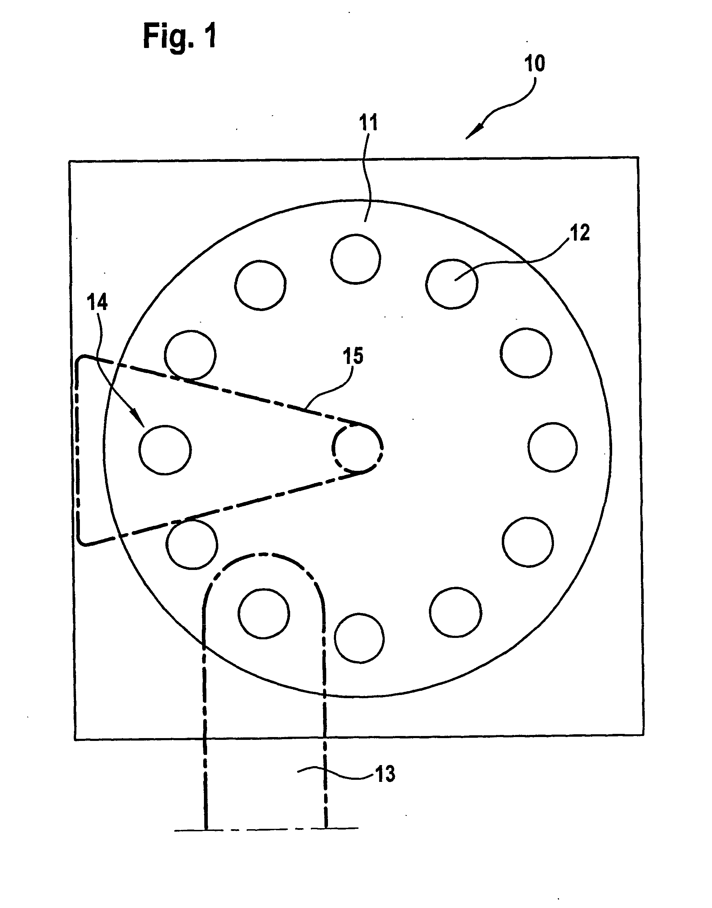

Figur 1 zeigt schematisch eine Rundtischpresse (10) von oben, d.h. mit Blick in Richtung Erdschwerefeld. Bei diesen traditionellen Rundtischpressen wird der portionierte Glasposten direkt unterhalb des Speisers (13) in die auf dem Pressentisch (11) angeordneten Unterwerkzeuge (12) bzw. Preßformen eingebracht. Durch Drehung des Pressentisches wird anschließend das Unterwerkzeug gemeinsam mit dem auf ihm positionierten Glasposten in die Preßstation (14), d.h. unter das Oberwerkzeug (15) bzw. den Preßstempel bewegt.

Bei dieser Drehbewegung des Pressentisches wird der Glasposten in der Pressenform bzw. im Unterwerkzeug tangentialen Beschleunigungskräften sowie radialen Fliehkräften ausgesetzt. Der Betrag dieser horizontalen Kräfte ist abhängig von den geometrischen Ausmaßen des Pressentisches bzw. des Abstandes des Unterwerkzeuges bzw. der Preßform und der auf diesem angeordneten Glasmasse vom Drehmittelpunkt, sowie der Geschwindigkeit der Drehbewegung und der Masse der eingebrachten Glasschmelze selbst.

Bei einer raschen Bewegung des Pressentisches und den hier betrachteten dünnflüssigen Glasschmelzen, mit Viskositäten < 10 dPas, kann es hierdurch zu einer Bewegung bzw. zu einer deutlichen, asymmetrischen Verformung des eingespeisten Glaspostens kommen. Im ungünstigsten Fall schwappt ein Teil des Glaspostens über den Formrand hinaus und verläßt die Form.

Für eine Verarbeitung dünnflüssiger Glasschmelzen können daher in der Regel nur geringe Transportgeschindigkeiten und -beschleunigungen toleriert werden. Dies induziert einen langsamen Transport und damit eine ungünstig hohe Bearbeitungsdauer, die eine unakzeptabel hohe Verweildauer der Glasschmelze zwischen ihrer Einspeisung und dem Preßvorgang mit sich bringt. Die Preßwerkzeuge, wie Unterwerkzeug, Oberwerkzeug und Formring, entziehen dem Glasposten bei Kontakt Wärme, wobei der Wärmeübergang an den Kontaktflächen Werkzeug/Werkstück erfolgt. Die Folge ist eine zum Teil erhebliche Abkühlung des eingespeisten Glaspostens und eine dadurch deutlich eingeschränkte Formgebung. Die Qualität des Glases wird hierdurch deutlich herabgesetzt. Insbesondere können aufgrund der bereits abgekühlten Randzonen des Glastropfens geringe Wandstärke nur noch äußerst eingeschränkt ausgepreßt werden.

Mit abnehmender Glasmasse des eingespeisten Glaspostens vollzieht sich die Abkühlung dieses Glaspostens in kürzeren Zeitspannen, da die wärmeabgebende Oberfläche nicht im gleichen Maße abnimmt, wie die Wärme speichernde Glasmasse selbst. Folglich erlangen die beschriebenen Probleme gerade bei der Fertigung von dünnen Linsen und Substraten besondere Bedeutung.

Die aus hochfesten Materialien gefertigten Preßwerkzeuge, welche in der Regel auch über eine hohe Wärmekapazität verfügen, entziehen einem dünnen Glasrohling, gleiche Kontaktflächen bzw. gleicher Wärmeübergang vorausgesetzt, schneller die Wärme bzw. kühlen diesen schneller aus. Beispielsweise wurde bei Glasrohlingen mit einer Dicke von etwa 0,7 mm durch den Kontakt mit den Preßwerkzeugen eine sehr schnelle durchgängige Abkühlung festgestellt, so daß die Abkühlung vor der Formgebung bereits soweit fortgeschritten ist, das die Endform nicht mehr realisiert werden kann.

Dem Problem der schnellen Abkühlung bei der Herstellung dünner Glasartikel dadurch begegnen, daß mehr Glasmasse als erforderlich eingespeist wird und ein dann wesentlich dickerer Glasrohling im Rahmen einer Nacharbeitung, die Läpp- und Poliervorgänge umfassen kann, auf die erforderliche geringe Dicke gebracht wird, ist nicht zielführend. Diese Vorgehensweise ist mit einem erheblichen Zeitaufwand verbunden und verursacht hohe Kosten.

Andererseits besteht bei schnellem transport die Gefahr der Rißbildung beim Preßvorgang, verursacht durch Falten oder Schlieren im Glasposten aufgrund einer Verformung beim horizontalen Transport. Das primäre Ziel einer schnellen Verarbeitung kollidiert bei den herkömmlichen Verfahren mit den hierbei auftretenden horizontalen Kräften.

Die DE 3924238 A1 beschreibt ein Verfahren zur Herstellung eines Glaselementes, bei dem geschmolzenes Glas in eine Gussform abgelassen wird und die Gussform mit einer Geschwindigkeit abgesenkt wird, die größer ist als die Geschwindigkeit des Schmelzglasflusses. Dadurch wird eine Trennung des gegossenen Schmelzglases vom abfließenden Schmelzglasfluss herbeigeführt.

Die US 4,210,433 beschreibt die Herstellung von Hohlglaskörpern. Ein Glasposten wird auf einer rotierenden Platte abgelegt und zu einer gleichmäßigen Glasschicht ausgezogen. Nachdem eine Form über der Glasschicht positioniert worden ist, wird durch Druckluft einerseits und Unterdruck andererseits die Glasschmelze in die Form gedrückt.

Die JP 9263414 beschreibt die Herstellung von Glaslinsen unter Verwendung einer rotierenden Form. Die JP 8169722 betrifft eine Anlage zur Herstellung optischer Elemente aus Glas, die mehrere Bearbeitungsstationen aufweist. Über die Transportbedingungen zwischen den einzelnen Stationen werden keine Aussagen gemacht.

Vor diesem Hintergrund ist es die Aufgabe der vorliegenden Erfindung, ein Verfahren für die Herstellung dünner Glasartikel durch Pressen von dünnflüssigen, niedrigviskosen Gläsern, insbesondere von Gläsern mit einer Viskosität <10 dPas, bereitzustellen, bei dem die nach dem Stand der Technik bekannten Nachteile, insbesondere die mit der schnellen Abkühlung des Glaspostens verbundenen Nachteile und die dadurch bedingte geringe Fertigungsqualität, vermieden werden.

Gelöst wird diese Aufgabe durch ein Verfahren der gattungsbildenden Art, bei dem die Oberflächenrauhigkeit R_{z} der Werkzeuge zwischen 5 und 15 µm liegt und Beschleunigungen zwischen 1 und 10 g (Erdbeschleunigung) realisiert werden.

Dabei wird ausgenutzt, dass speziell niedrigviskose Glasposten sich zum Teil erheblich deformieren lassen, wenn auf sie Kräfte aufgrund Beschleunigung wirken. Die Temperatur und die Viskosität des Glases korrelieren miteinander, weshalb hochtemperierte Glasposten eine geringere Viskosität aufweisen als niedrigtemperierte Glasposten. Hochtemperierte und damit niedrigviskose Glasposten verfügen über eine dünnflüssige Konsistenz und sind daher leichter bzw. unter Einsatz geringerer Kräfte verformbar.

Vorzugsweise besitzt das niedrigviskose Glas eine Viskosität η von <10 dPas.

Indem die Deformation unter Einwirkung von Beschleunigungskräften gezielt für eine Verformung des Glaspostens genutzt wird, kann bei dem sich anschließenden Preßschritt sowohl der aufgewendete Druck der Formgebungswerkzeuge als auch die Kontaktzeit zwischen Werkzeug/Werkstück, d.h. Glas und Formgebungswerkzeug verringert werden.

Insbesondere ist das Oberwerkzeug während des Verformens des Glaspostens nicht mit diesem Glasposten in Kontakt, weshalb sich die für den Wärmeübergang verantwortliche Kontaktfläche des Glaspostens mit dem Unterwerkzeug beschränkt. Da sich die abgeführte Wärmemenge aus dem Wärmestrom und der Kontaktzeit ergibt, kann durch Reduzierung der Kontaktzeit die absolute abgeführte Wärmemenge reduziert werden.

Das erfindungsgemäße Verfahren, bei dem die aus dem zu verarbeitenden Glasposten abgeführte absolute Wärmemenge einerseits durch Reduzierung der Konwktflächen und andererseits durch Reduzierung der Kontaktzeit minimiert wird, gewährleistet, daß der Glasposten bis zum abschließenden Formgebungsprozeß durch Pressen hochtemperiert, damit niedrigviskos und dünnflüssig, d.h. leicht verformbar bleibt. Infolge der leichten Verformbarkeit ist es darüber hinaus möglich, bei gleichem Druck der Formgebungswerkzeuge die axiale Dicke des verpreßten Glasrohlings im Vergleich zu herkömmlichen Verfahren zu verringern.

Darüber hinaus hat sich herausgestellt, daß die mit dem erfindungsgemäßen Verfahren hergestellten Glasartikel eine gegenüber den konventionell hergestellten Glasartikeln höhere Oberflächengüte aufweisen und insbesondere, wie bereits erwähnt, sehr dünne Glasartikel herstellbar sind. Gerade die Herstellung dünner Glasartikel durch Preßverfahren galt nach dem Stand der Technik aus dem eingangs beschriebenen Gründen als nicht durchführbar.

Ein Nachbearbeiten des verpreßten Glasrohlings ist nur noch in geringem Umfang notwendig, da bereits sehr geringe axiale Dicken mit Hilfe des erfindungsgemäßen Formgebungsprozesses realisiert werden können.

Gute Ergebnisse werden erzielt bei Glasposten, die eine dynamische Viskosität η < 10 dPas, vorzugsweise η <4 dPas, aufweisen.

Die für eine Deformation des Glaspostens erforderlichen Beschleunigungen liegen betragsmäßig zwischen der Erdbeschleunigung g und dem zehnfachen der Erdbeschleunigung g. Je höher die Beschleunigung des Glaspostens, desto größer ist die durch die Beschleunigungskräfte erzielte Vorformung des Glaspostens. Dabei wirken auf den in das Unterwerkzeug eingespeisten Glasposten im wesentlichen seine eigene Gewichtskraft F_{G}, die vom Unterwerkzeug auf ihn wirkende Kraft F_{W} und die infolge der Beschleunigung oder Verzögerung des Glaspostens durch Bewegung des Unterwerkzeuges hervorgerufene Trägheitskraft F_{T}. Während die Gewichtskraft eine zeitlich unveränderliche Größe darstellt, sind die beiden letztgenannten Kräfte F_{W} und F_{T} dynamische bzw. zeitlich veränderbare Kräfte.

Der Glasposten kann grundsätzlich auf unterschiedliche Weisen durch Beschleunigungskräfte vorgeformt werden. Verwendet man beispielsweise die konventionellen Mehrstationen-Drehtischpressen, greifen beim Transportieren des Glaspostens von der Einspeisestation zur Preßstation nach außen gerichtet Zentrifugalkräfte als Beschleunigungskräfte am Glasposten an. Werden diese Beschleunigungskräfte mit einem dezentrierten Einspeisen des Glaspostens in das Unterwerkzeug kombiniert, kann der eingespeiste Glasposten schon vor dem Preßvorgang gezielt deformiert, d.h. relativ gleichmäßig in der Form verteilt werden.

Eine weitere Möglichkeit, den Glasposten durch Beschleunigungskräfte vorzuformen, besteht darin, die durch das Unterwerkzeug gebildete Form nach Einspeisen des Glaspostens um die eigene Achse rotieren zu lassen. Durch die radialen Beschleunigungen infolge der Rotation wirken auf den Glasposten Zentrifugalkräfte, die das Glas aus der Mitte der Form an den Rand der Form ziehen. Die Rotationsgeschwindigkeit bzw. die Rotationszeit dienen dabei als Einflußgrößen auf den Umfang und die Art der Verformung.

Ein weiterer zu berücksichtigender Parameter, der Einfluß auf die Vorformung des Glaspostens hat, ist die Rauhigkeit R_{Z} der Werkzeugoberflächen, insbesondere der Oberfläche des Unterwerkzeuges. Diese sollte im Bereich zwischen 5 bis 15 µm liegen.

Überraschenderweise hat sich gezeigt, daß das Glas besser auseinanderfließt, sich im Rahmen der Vorformung leichter über die Oberfläche des Unterwerkzeuges verteilt, wenn die Oberfläche des Unterwerkzeuges nicht ideal glatt ist, sondern eine gewisse Rauhigkeit aufweist. Versuche haben ergeben, daß vorzugsweise Unterwerkzeuge mit einer Rauhigkeit R_{Z} von 9 µm zu verwenden sind. Darüber hinaus wirkt eine gewisse Rauhigkeit der Werkzeugoberflächen einem Anhaften des Glaspostens bzw. verpreßten Glasrohlings am Werkzeug entgegen, wodurch einerseits die Qualität der hergestellten Glasartikel und andererseits die Standzeit der Werkzeuge infolge einer Verhinderung von Ablagerungen erhöht wird.

Bedeutung hat das erfindungsgemäße Verfahren zur Herstellung dünner Glasartikel insbesondere bei der Herstellung von asphärischen Strukturen, deren Nachbearbeitung, die in der Regel in einem Schleifvorgang besteht, infolge des nicht einheitlichen Krümmungsradius besonders aufwendig ist. Nach dem Stand der Technik können asphärische Konturen auch durch Wiedererwärmen des Preßlings und anschließende Formgebung erzielt werden Dies ist ebenfalls aufwendig und kostenintensiv.

Neben der Möglichkeit, Substrate, diffraktive, refraktive sowie reflektierende optische Elemente mittels des Verfahrens herzustellen, ist auch die Herstellung von mikro- sowie makrostrukturierten Körpern bzw. Bauteilen mittels Preßverfahren möglich, dabei werden entsprechend strukturierte Formgebungswerkzeuge eingesetzt. Nach dem Stand der Technik ist hingegen die Herstellung von strukturierten Körpern in der Regel zweistufig, wobei ein zunächst im Preßverfahren hergestellter Rohling zum Zwecke der Strukturierung wiedererwärmt werden muß.

Vorteilhaft sind Ausführungsformen des Verfahrens, bei dem der Glasposten durch eine Beschleunigung in vertikaler Richtung vorgeformt wird.

Günstig an dieser Verfahrensvariante ist, daß die am Glasposten angreifenden Kräfte, die Wirkungslinien der Gewichtskraft F_{G}, die Trägheitskraft F_{T} und die vom Werkzeug auf den Glasposten bewirkende Kraft F_{W} parallel zueinander verlaufen.

Dabei setzt sich in der Regel die vom Unterwerkzeug auf den Glasposten wirkende Kraft F_{W} betragsmäßig aus der Summe der Gewichtskraft F_{G} und der Trägheitskraft F_{T} zusammen, wobei F_{W}.den beiden Kräften F_{G} und F_{T} entgegengerichtet ist. Es gilt das Prinzip von Aktio gleich Reaktio. Der auf dem Unterwerkzeug positionierte Glasposten wird dann bei Beschleunigung bzw. Verzögerung des Unterwerkzeuges zwischen den beiden entgegengerichteten Kräften, die beide betragsmäßig der Kraft F_{W} entsprechen, zusammengedrückt. Dadurch wird der nach dem Einspeisen tropfenähnlich geformte Glasposten bzw. Glastropfen zu einer mehr oder weniger flachen Scheibe vorgeformt. Günstig an dieser bevorzugten Ausführungsform ist, daß die Gewichtskraft des Glaspostens einen Teil der Vorformkraft darstellt, weshalb sie gewissermaßen einen Anteil von einer Erdbeschleunigung zu der zu erzeugenden Beschleunigung beiträgt.

Vorteilhaft sind Ausführungsformen des Verfahrens, bei dem der Glasposten durch eine nach unten gerichtete, abrupt verzögerte und die Beschleunigung induzierende Bewegung des Unterwerkzeuges vorgeformt wird.

Bei dieser Ausführungsform wird das Unterwerkzeug, welches zur Einspeisung der dünnflüssigen Glasmasse unterhalb des Speisers positioniert war, mit dem auf ihm positionierten Glasposten nach unten bewegt und abrupt abgebremst. Durch das Abbremsen bzw. Verzögern des Unterwerkzeuges und des auf ihm befindlichen Glaspostens wird die Trägheitskraft F_{T} generiert, die zusammen mit der Gewichtskraft F_{G} den Glasposten flachdrückt.

Günstig an dieser Verfahrensvariante ist, daß in den überwiegenden Anwendungsfällen, zumindest wenn horizontale Kräfte bzw. Beschleunigungskräfte vermieden werden sollen, das Unterwerkzeug ohnehin in eine tiefer gelegene Position verfahren werden muß, um zwischen Speiser und Unterwerkzeug einen Zwischenraum zur Plazierung des für den Formgebungsprozeß ebenfalls notwendigen Oberwerkzeuges zu schaffen. Dieses dann ohnehin erforderliche Absenken des Unterwerkzeuges wird bei der vorteilhaften Ausführungsform gleichzeitig zur Vorformung des Glaspostens ausgenutzt, weshalb keine zusätzliche, eine Beschleunigung generierende Bewegung erforderlich ist.

Vorteilhaft sind Ausführungsformen des Verfahrens, bei denen die maximale Beschleunigung am Ende des Absenkvorganges des Unterwerkzeuges realisiert wird.

Günstig sind aber auch Ausführungsformen des Verfahrens, bei denen der Glasposten durch eine nach oben gerichtete, abrupt beschleunigte und die Beschleunigung induzierende Bewegung des Unterwerkzeuges vorgeformt wird.

Zum einen kann diese Ausführungsform mit der zuvor beschriebenen Ausführungsform kombiniert werden, so daß der auf dem Unterwerkzeug positionierte Glasposten einer zweistufigen Vorformung unterzogen wird, indem er in einer ersten Stufe durch ein Absenken des Unterwerkzeuges und in einer zweiten Stufe durch ein Anheben des Unterwerkzeuges vorgeformt wird.

Aber auch für sich allein genommen gibt es Anwendungsfälle, in denen diese Ausführungsform vorteilhaft ist. Beispielsweise, falls ein Absenken des Unterwerkzeuges für eine Positionierung des Oberwerkzeuges nicht zwingend erforderlich ist oder zur Positionierung des Oberwerkzeuges nicht das Unterwerkzeug abgesenkt sondern der Speiser entfernt wird. Werden in diesen Fällen Unter- und Oberwerkzeug aufeinander zu gefahren, kann die Bewegung des Unterwerkzeuges für eine Vorformung genutzt werden.

Ebenso ist denkbar, daß das Oberwerkzeug für den Preßvorgang fixiert wird und das Unterwerkzeug das Werkzeug ist, welches bewegt wird. Auch in diesen Fällen wird eine ohnehin notwendige Bewegung des Unterwerkzeuges zur Vorformung des Glaspostens ausgenutzt.

Vorteilhaft sind bei der zuletzt genannten Ausführungsform des Verfahrens Varianten, die dadurch gekennzeichnet sind, daß die maximale Beschleunigung des Unterwerkzeuges zu Beginn der Bewegung generiert wird.

Hintergrund für diese bevorzugte Ausführungsform ist, daß das beschleunigte Unterwerkzeug wieder abgebremst bzw. verzögert werden muß und die dann durchzuführende Verzögerung Trägheitskräfte generiert, die dem Flachdrücken des Glaspostens entgegenwirken. Folglich strebt man an, das Unterwerkzeug am Anfang der Bewegung mit der maximalen Beschleunigung zu belegen, diese Beschleunigung langsam zu vermindern und dadurch das Unterwerkzeug nach einer gewissen Strecke zum Stillstand zu bringen.

Vorteilhaft ist das Verfahren, bei dem die Glasschmelze zwischen den Verfahrensschritten "Einspeisen" und dem Verfahrensschritt "Verpressen" im wesentlichen nur vertikalen Kräften ausgesetzt wird.

Hierdurch kann eine dezentrierte Positionierung des Glaspostens im Unterwerkzeug durch Einwirken horizontaler Kräfte vermieden werden.

Ebenso wird eine asymmetrische Verformung des Glaspostens infolge nicht vertikaler Kräfte vermieden. Falten und Schlieren im Glasposten entfallen zusammen mit dem für sie ursächlichen horizontalen Transport. Ein Verlassen eines Teils des Glaspostens aus der Form hinaus wird unmöglich. Des weiteren findet eine Entkopplung der Fertigungs- bzw. Transportgeschwindigkeit und der sie einschränkenden horizontal wirkenden Kräfte in einfacher Weise durch die Eliminierung letzterer statt. Die Fertigungs- bzw. Transportgeschwindigkeit kann unabhängig, ganz nach den sich aus der Abkühlung des Glaspostens ergebenden Notwendigkeit einer schnellen Weiterverarbeitung frei gewählt werden.

Vorteilhaft sind Ausführungsformen des Verfahrens, bei denen das Unterwerkzeug für den Einspeisevorgang unterhalb des Speiserauslaufs positioniert und das dünnflüssige Glas eingespeist wird, und nach Beendigung des Einspeisevorganges das Unterwerkzeug gemeinsam mit dem eingespeisten Glasposten vertikal bis in eine untere Ruheposition abgesenkt wird und das während des Einspeisevorganges in einer Parkposition befindliche Oberwerkzeug in den zwischen Speiserauslauf und Unterwerkzeug durch das Absenken des Unterwerkzeugs gebildeten Zwischenraum eingebracht wird, wobei das Oberwerkzeug für den Preßvorgang fixiert wird und durch Aufwärtsbewegen des Unterwerkzeuges in Richtung des so fixierten Oberwerkzeuges der Glasposten in Form gepreßt wird.

Darüber hinaus sind auch Ausführungsformen des Verfahrens vorteilhaft, bei denen das Unterwerkzeug für den Einspeisevorgang unterhalb des Speiserauslaufs positioniert und das dünnflüssige Glas eingespeist wird, und nach Beendigung des Einspeisevorganges das Unterwerkzeug gemeinsam mit de, eingespeisten Glasposten vertikal bis in eine untere Ruheposition abgesenkt wird und das während des Einspeisevorganges in einer Parkposition befindliche Oberwerkzeug in den zwischen Speiserauslauf und Unterwerkzeug durch das Absenken des Unterwerkzeugs gebildeten Zwischenraum eingebracht wird, wobei durch Abwärtsbewegen des Oberwerkzeuges in Richtung des für den Pressvorgang fixierten Unterwerkzeuges der Glasposten in Form gepresst wird.

Eine sehr günstige Verfahrensvariante sieht vor, dass das Oberwerkzeug während des Einspeisevorganges seitlich und somit auf gleicher Höhe mit dem durch das Absenken des Unterwerkzeuges zwischen Speiserauslauf und Unterwerkzeug ausgebildeten Zwischenraum geparkt wird und für den Pressvorgang durch ein seitliches, im wesentlichen horizontales Einrücken oder Einschwenken in den Zwischenraum oberhalb des Unterwerkzeuges positioniert wird.

Hierdurch wird beim Einbringen nur eine zweidimensionale Bewegung des Oberwerkzeuges in den Zwischenraum erforderlich. Eine wesentlich komplexere dreidimensionale Bewegung kann somit vermieden werden. Dies hat zur Folge, dass sowohl die für die Bewegung des Oberwerkzeuges bereitzustellende Mechanik als auch die notwendige Steuerung wesentlich geringeren Ansprüchen genügen müssen, wodurch Kosten für die Produktionsmittel gesenkt werden.

Die dünnen Glasartikel, die mit dem Verfahren herstellbar sind, sind vorzugsweise Hard-Disk-Substrate, sphärische- und asphärische Linsenarrays, mikro- und makrostrukturierte Körper, elektrisch isolierende Trägerplatten für elektrische Schaltkreise und Komponenten, insbesondere Substrate für Leiterplatten, oder Substrate zum Aufdrucken elektrischer Schaltkreise.

Derartige Bauteile werden nach dem Stand der Technik nicht durch Pressen hergestellt, weil die bekannten Preßverfahren die Herstellung von Substraten geringer Dicke nicht ermöglichen.

Nach dem Stand der Technik ist Ausgangsmaterial bzw. Rohling für den Hard-Disk gepreßtes Glas, wobei der gepreßte Außendurchmesser D des Rohlings etwas größer ist als der erforderliche Durchmesser des Hard-Disk-Blanks. Zur Erzielung der endgültigen Blankdicke erfolgen anschließend Läpp- und Poliervorgänge. Die Dicke d des gepreßten Rohlings ist abhängig von dem Außendurchmesser D und beträgt beispielsweise 1,1 mm für einen Außendurchmesser D von 95 mm. Damit ergibt sich ein Verhältnis zwischen Dicke d und Durchmesser D von d/D = 0,0115 bzw. 1,15%.

Mit Hilfe des erfindungsgemäßen Verfahrens können niedrigviskose Gläser verpreßt werden, wodurch die Möglichkeit geschaffen wird, dünne Substrate mittels Preßverfahren herzustellen. Damit können auch bei der Herstellung von Hard-Disk-Substraten Rohlinge geringerer Dicke bei gleichem Außendurchmesser erzeugt werden. Wie der folgenden Tabelle zu entnehmen ist, kann mit Hilfe des erfindungsgemäßen Verfahrens das Verhältnis d/D in dem oben erwähnten Beispiel von 1,15% auf 0,95% gesenkt werden. Dies entspricht annähernd einer Reduzierung des Verhältnisses um 20%.

| Außendurchmesser D | Dicke d | Verhältnis d/D |
|---|---|---|
| 95 mm | 0,90 mm | 0,95 % |
| 84 mm | 0,85 mm | 1,01 % |
| 65 mm | 0,80 mm | 1,23 % |

Neben der Materialersparnis ist vor allen Dingen die Verkürzung der Läpp- und Poliervorgänge vorteilhaft.

Das erfindungsgemäße Verfahren wird im folgenden schematisch anhand eines Ausführungsbeispieles näher erläutert. Hierbei zeigt:
- Fig. 1: Mehrstationen-Drehtischpresse von oben, schematisch,
- Fig. 2: den Einspeisevorgang des Glaspostens,
- Fig. 3: den Absenkvorgang des Unterwerkzeuges,
- Fig. 3a: das Unterwerkzeug mit der auf ihm positionierten Glasmasse und den an der Glasmasse angreifenden Kräften beim Verzögern während des in Fig. 3 dargestellten Absenkvorganges des Unterwerkzeuges,
- Fig. 4: das Einbringen des Oberwerkzeuges, und
- Fig. 5: das Verpressen des Glaspostens.

### Figur 1 wurde bereits beschrieben

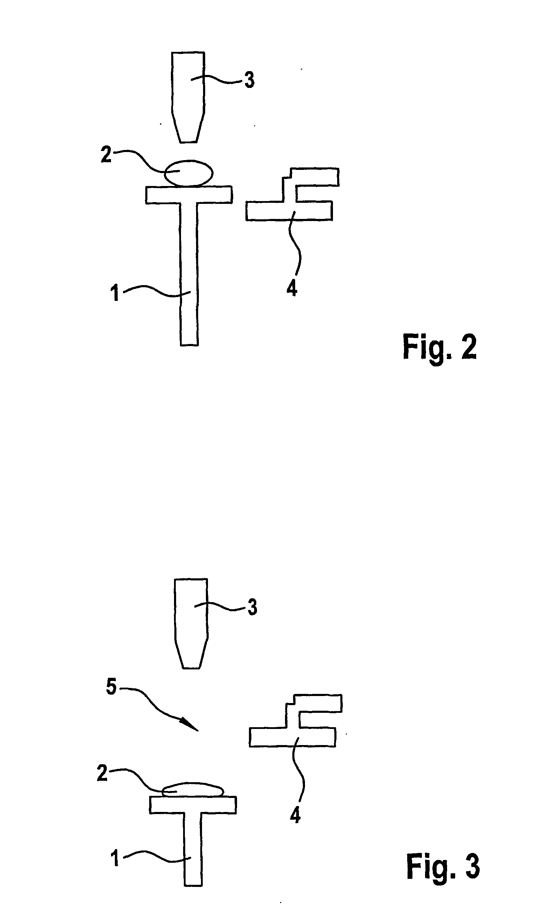

Für den in Fig. 2 gezeigten Einspeisevorgang wird das Unterwerkzeug 1 dicht unterhalb des Speiserauslaufs 3 positioniert, um das dünnflüssige Glas in das Unterwerkzeug 1 einzuspeisen. Das Oberwerkzeug 4 befindet sich dabei in einer seitlichen Parkposition.

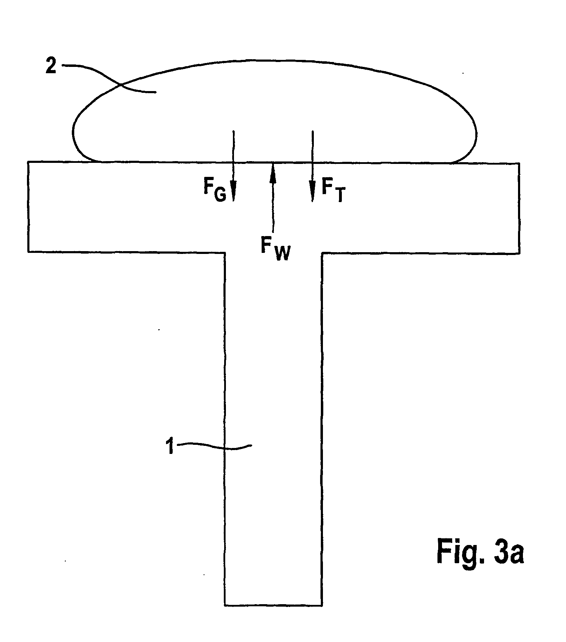

Nach Beendigung des Einspeisevorganges wird, wie in Fig. 3 dargestellt, das Unterwerkzeug 1 gemeinsam mit dem eingespeisten und auf ihm befindlichen Glasposten 2 vertikal bis in eine untere Ruheposition abgesenkt. Figur 3a zeigt das Unterwerkzeug 1 mit der auf ihm positionierten Glasmasse 2 und den an der Glasmasse 2 angreifenden Kräften beim Verzögern während des in Fig. 3 dargestellten Absenkvorganges des Unterwerkzeuges 1.
Die eingezeichneten Kräfte, die Gewichtskraft F_{G}, die Trägheitskraft F_{T} und die vom Unterwerkzeug 1 auf den Glasposten 2 wirkende Kraft F_{W} sind die im Rahmen der Vorformung auf den Glasposten 2 wirkenden Kräfte. Figur 3a veranschaulicht das "Zusammendrücken" des Glaspostens 2 zwischen der vom Unterwerkzeug 1 auf den Glasposten 2 wirkenden Kraft F_{W} und ihrer Reaktionskraft, welche sich aus der Summe von F_{G} und F_{T} ergibt.

Durch das Absenken des Unterwerkzeuges 1 mit dem auf ihm befindlichen Glasposten 2 wird zwischen Speiserauslauf 3 und Unterwerkzeug 1 ein Zwischenraum 5 gebildet.

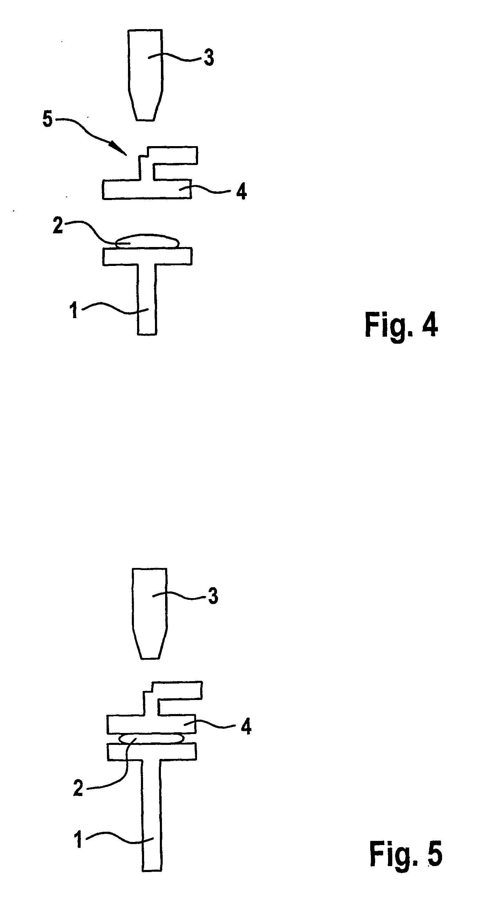

Fig. 4 zeigt das Einbringen des Oberwerkzeuges 4 in den Zwischenraum 5. Das Oberwerkzeug 4 wird so in den Zwischenraum 5 eingebracht, daß es unter den Speiserauslauf 3 zu liegen kommt und gegenüber dem Unterwerkzeug 1 positioniert ist, so daß ein Verpressen des Glaspostens 2, der sich zwischen Unterwerkzeug 1 und Oberwerkzeug 4 befindet, in einfacher Weise durch ein Zusammenführen des Oberwerkzeuges 4 und des Unterwerkzeuges 1 erfolgen kann. Das Oberwerkzeug 4 wird in Vorbereitung auf den eigentlichen Preßvorgang durch eine hier nicht dargestellte Führung fixiert.

Fig. 5 zeigt das Verpressen des Glaspostens 2 zwischen Oberwerkzeug 4 und Unterwerkzeug 1. In den vorliegenden Ausführungsbeispielen wird der Glasposten 2 durch Aufwärtsbewegen des Unterwerkzeuges 1 in Richtung des fixierten Oberwerkzeuges 4 in Form gepreßt.

## Patentansprüche

1. Verfahren zur Herstellung von dünnen Glasartikeln aus niedrigviskosem Glas, bei dem eine dünnflüssige Glasmasse (2) in ein Unterwerkzeug (1) eingespeist wird, die dann durch Beschleunigungskräfte vorgeformt wird und danach durch Zusammenführen eines gegenüber dem Unterwerkzeug (1) positionierten Oberwerkzeuges (4) und des Unterwerkzeuges (1) verpresst wird, **dadurch gekennzeichnet, dass** die Oberflächenrauhigkeit R_{Z} der Werkzeuge (1, 4) zwischen 5 und 15 µm liegt und Beschleunigungen zwischen 1 und 10 g (Erdbeschleunigung) realisiert werden.

2. Verfahren nach Anspruch 1, **dadurch gekennzeichnet, dass** der Glasposten (2) durch vertikal wirkende Beschleunigungskräfte vorgeformt wird.

3. Verfahren nach einem der vorherigen Ansprüche, **dadurch gekennzeichnet, dass** der Glasposten (2) durch eine nach unten gerichtete, abrupt verzögerte und die Beschleunigung induzierende Bewegung des Unterwerkzeuges (1) vorgeformt wird.

4. Verfahren nach Anspruch 3, **dadurch gekennzeichnet, dass** die maximale Beschleunigung am Ende des Absenkvorganges realisiert wird.

5. Verfahren nach einem der Ansprüche 1 oder 2, **dadurch gekennzeichnet, dass** der Glasposten (2) durch eine nach oben gerichtete, abrupt beschleunigte und die Beschleunigung induzierende Bewegung des Unterwerkzeuges (1) vorgeformt wird.

6. Verfahren nach Anspruch 5, **dadurch gekennzeichnet, dass** die maximale Beschleunigung am Anfang der Aufwärtsbewegung realisiert wird.

7. Verfahren nach einem der vorherigen Ansprüche, **dadurch gekennzeichnet, dass** die Glasschmelze zwischen dem Verfahrensschritt Einspeisen und dem Verfahrensschritt Verpressen im Wesentlichen nur vertikalen Kräften ausgesetzt wird.

8. Verfahren nach Anspruch 7, **dadurch gekennzeichnet, dass** das Unterwerkzeug (1) für den Einspeisevorgang unterhalb des Speiserauslaufs (3) positioniert und das dünnflüssige Glas eingespeist wird, dass nach Beendigung des Einspeisevorganges das Unterwerkzeug (1) gemeinsam mit dem eingespeisten Glasposten (2) vertikal bis in eine untere Ruheposition abgesenkt wird und dass das während des Einspeisevorganges in einer Parkposition befindliche Oberwerkzeug (4) in den zwischen Speiserauslauf (3) und Unterwerkzeug (1) durch das Absenken des Unterwerkzeugs (1) gebildeten Zwischenraum (5) eingebracht wird, wobei das Oberwerkzeug (4) für den Pressvorgang fixiert wird und durch Aufwärtsbewegen des Unterwerkzeuges (1) in Richtung des so fixierten Oberwerkzeuges (4) der Glasposten (2) in Form gepresst wird.

9. Verfahren nach Anspruch 7, **dadurch gekennzeichnet, dass** das Unterwerkzeug für den Einspeisevorgang unterhalb des Speiserauslaufs (3) positioniert und das dünnflüssige Glas eingespeist wird, dass nach Beendigung des Einspeisevorganges das Unterwerkzeug (1) gemeinsam mit dem eingespeisten Glasposten (2) vertikal bis in eine untere Ruheposition abgesenkt wird und dass das während des Einspeisevorganges in einer Parkposition befindliche Oberwerkzeug (4) in den zwischen Speiserauslauf (3) und Unterwerkzeug (1) durch das Absenken des Unterwerkzeugs (1) gebildeten Zwischenraum (5) eingebracht wird, wobei durch Abwärtsbewegen des Oberwerkzeuges (4) in Richtung des für den Pressvorgang fixierten Unterwerkzeuges (1) der Glasposten (2) in Form gepresst wird.

10. Verfahren nach Anspruch 8 oder 9, **dadurch gekennzeichnet, dass** das Oberwerkzeug (4) während des Einspeisevorganges seitlich und somit auf gleicher Höhe mit dem durch das Absenken des Unterwerkzeuges (1) zwischen Speiserauslauf (3) und Unterwerkzeug (1) ausgebildeten Zwischenraum (5) geparkt wird und für den Pressvorgang durch ein seitliches, im wesentlichen horizontales Einrücken oder Einschwenken in den Zwischenraum (5) oberhalb des Unterwerkzeuges (1) positioniert wird.

11. Verfahren nach einem der Ansprüche 1 bis 10, **dadurch gekennzeichnet, dass** die dünnen Glasartikel Substrate, Hard-Disk-Substrate, sphärische- oder asphärische Linsenarrays, mikro- und makrostrukturierte Körper, elektrisch isolierende Trägerplatten für elektrische Schaltkreise und Komponenten, insbesondere Substrate für Leiterplatten, oder Substrate zum Aufdrucken elektrischer Schaltkreise sind.

12. Verfahren nach einem der Ansprüche 1 bis 11, **dadurch gekennzeichnet, dass** das niedrigviskose Glas eine Viskosität η von <10 dPas hat.

## Claims

1. Process for producing thin glass articles from low-viscosity glass, in which a glass compound (2) of low viscosity is fed into a bottom die (1) and is then preshaped by acceleration forces, and then the glass compound is pressed by bringing together a top die (4), which is positioned opposite the bottom die (1), and the bottom die (1), **characterized in that** the surface roughness R_{Z} of the dies (1, 4) is between 5 and 15 µm and accelerations of between 1 and 10 g (gravitational acceleration) are realized.

2. Process according to Claim 1, **characterized in that** the glass gob (2) is preshaped by vertically acting acceleration forces.

3. Process according to one of the preceding claims, **characterized in that** the glass gob (2) is preshaped by a downwardly directed, abruptly decelerated, acceleration-inducing movement of the bottom die (1).

4. Process according to Claim 3, **characterized in that** the maximum acceleration is realized at the end of the lowering operation.

5. Process according to Claim 1 or 2, **characterized in that** the glass gob (2) is preshaped by an upwardly directed, abruptly accelerated, acceleration-inducing movement of the bottom die (1).

6. Process according to Claim 5, **characterized in that** the maximum acceleration is realized at the start of the upwards movement.

7. Process according to one of the preceding claims, **characterized in that** the glass melt is exposed substantially only to vertical forces between the feed-in process step and the pressing process step.

8. Process according to Claim 7, **characterized in that** the bottom die (1), for the feed-in operation, is positioned beneath the feeder outlet (3) and the low-viscosity glass is fed in, **in that** after the feed-in operation has ended the bottom die (1), together with the glass gob (2) which has been fed into it, is lowered vertically into a lower at-rest position, and **in that** the top die (4), which is in a parked position during the feed-in operation, is introduced into the space (5) which has been formed between feeder outlet (3) and bottom die (1) as a result of the lowering of the bottom die (1), the top die (4) being fixed for the pressing operation, and the glass gob (2) being pressed into shape by an upward movement of the bottom die (1) in the direction of the top die (4) which has been fixed in this way.

9. Process according to Claim 7, **characterized in that** the bottom die, for the feed-in operation, is positioned beneath the feeder outlet (3) and the low-viscosity glass is fed in, **in that** after the feed-in operation has ended the bottom die (1), together with the glass gob (2) which has been fed in, is lowered vertically into a lower at-rest position, and **in that** the top die (4), which is in a parked position during the feed-in operation, is introduced into the space (5) which has been formed between feeder outlet (3) and bottom die (1) as a result of the lowering of the bottom die (1), with the glass gob (2) being pressed into shape by a downwards movement of the top die (4) in the direction of the bottom die (1), which has been fixed in place for the pressing operation.

10. Process according to Claim 8 or 9, **characterized in that** the top die (4) is parked to the side of and therefore at the same height as the space (5) which is formed between feeder outlet (3) and bottom die (1) as a result of the lowering of the bottom die (1), and for the pressing operation is positioned above the bottom die (1) by being moved or pivoted laterally, substantially horizontally, into the space (5).

11. Process according to one of Claims 1 to 10, **characterized in that** the thin glass articles are substrates, hard disc substrates, spherical or aspherical lens arrays, microstructured and macrostructured bodies, electrically insulating carrier plates for electric circuits and components, in particular substrates for printed-circuit boards, or substrates for electric circuits to be printed on.

12. Process according to one of Claims 1 to 11, **characterized in that** the low-viscosity glass has a viscosity η of <10 dPas.

## Revendications

1. Procédé de fabrication de minces objets en verre peu visqueux, dans lequel une pâte fluide de verre (2) est mise en réserve dans un outil inférieur (1), est ensuite préformée par des forces d'accélération et ensuite pressée après avoir rapproché de l'outil inférieur (1) un outil supérieur (4) disposé face à l'outil inférieur (1), **caractérisé en ce que** la rugosité des surfaces R_{z} des outils (1, 4) est comprise dans la plage de 5 à 15 µm et **en ce qu'**on réalise des accélérations comprises entre 1 et 10 g (accélération terrestre).

2. Procédé selon la revendication 1, **caractérisé en ce que** la paraison de verre (2) est préformée par des forces d'accélération qui agissent à la verticale.

3. Procédé selon l'une des revendications précédentes, **caractérisé en ce que** la paraison de verre (2) est préformée par un déplacement de l'outil inférieur (1) orienté vers le bas, brusquement ralenti et induisant l'accélération.

4. Procédé selon la revendication 3, **caractérisé en ce que** l'accélération maximale est réalisée à la fin de l'opération d'abaissement.

5. Procédé selon l'une des revendications 1 ou 2, **caractérisé en ce que** la paraison de verre (2) est préformée par un déplacement de l'outil inférieur (1) orienté vers le haut, brusquement accéléré et induisant l'accélération.

6. Procédé selon la revendication 5, **caractérisé en ce que** l'accélération maximale est réalisée au début du déplacement vers le haut.

7. Procédé selon l'une des revendications précédentes, **caractérisé en ce qu'**entre l'étape de traitement mise en réserve et l'étape de traitement pressage, le verre fondu n'est essentiellement exposé qu'à des forces verticales.

8. Procédé selon la revendication 7, **caractérisé en ce que** pour l'opération de mise en réserve, l'outil inférieur (1) est placé en dessous de la sortie (3) de la réserve et le verre fluide est mis en réserve, **en ce que** lorsque l'opération de mise en réserve est terminée, l'outil inférieur (1) est abaissé verticalement en même temps que la paraison de verre (2) mise en réserve jusque dans une position inférieure de repos et **en ce que** pendant l'opération de mise en réserve, l'outil supérieur (4) qui se trouve dans une position de stationnement est, par abaissement de l'outil inférieur (1), amené dans l'espace intermédiaire (5) qui est formé entre la sortie (3) de la réserve et l'outil inférieur (1), l'outil supérieur (4) étant immobilisé pour l'opération de pressage et la paraison de verre (2) étant pressée dans sa forme par le déplacement vers le haut de l'outil inférieur (1) en direction de l'outil supérieur (4) ainsi immobilisé.

9. Procédé selon la revendication 7, **caractérisé en ce que** pour l'opération de mise en réserve, l'outil inférieur est placé en dessous de la sortie (3) de la réserve et le verre fluide est mis en réserve, **en ce que** lorsque l'opération de mise en réserve est terminée, l'outil inférieur (1) est abaissé verticalement avec la paraison de verre (2) qui y est mise en réserve jusque dans une position inférieure de repos et **en ce que** pendant l'opération de mise en réserve, l'outil supérieur (4) situé dans une position de stationnement est, par abaissement de l'outil inférieur (1), amené dans l'espace intermédiaire (5) formé entre la sortie (3) de la réserve et l'outil inférieur (1), le déplacement vers le bas de l'outil supérieur (4) en direction de l'outil inférieur (1) immobilisé pour l'opération de pressage entraînant que la paraison de verre (2) est pressée dans sa forme.

10. Procédé selon les revendications 8 ou 9, **caractérisé en ce que** pendant l'opération de mise en réserve, l'outil supérieur (4) est stationné latéralement et donc à même hauteur que l'espace intermédiaire (5) formé par l'abaissement de l'outil (1) entre la sortie (3) de la réserve et l'outil inférieur (1) et est positionné au-dessus de l'outil inférieur (1) pour l'opération de pressage, par un recul ou un pivotement essentiellement horizontal dans l'espace intermédiaire (5).

11. Procédé selon l'une des revendications 1 à 10, **caractérisé en ce que** les minces objets en verre sont des supports, des supports de disque dur, des séries sphériques ou asphériques de lentilles, des corps microstructurés ou macrostructurés, des plaques de support électriquement isolantes pour des circuits et des composants, en particulier des supports pour cartes de circuit imprimé, ou des supports destinés à imprimer des circuits électriques.

12. Procédé selon l'une des revendications 1 à 11, **caractérisé en ce que** le verre à faible viscosité a une viscosité η < 10 dPa.s.
